# EUROPÄISCHE PATENTSCHRIFT

(11) **EP 0 233 171 B1**
(45) Veröffentlichungstag und Bekanntmachung des Hinweises auf die Patenterteilung: **21.09.1994**
(21) Anmeldenummer: 87890012.5
(22) Anmeldetag: 22.01.1987
(51) Int. Cl.: E06B 3/22, B29C 67/14

(54) **Fensterrahmenprofil und Verfahren zu seiner Herstellung**
Window frame profile member and its manufacturing method
Profilé pour cadre de fenêtre et son procédé de fabrication

(30) Priorität: 30.01.1986 AT 226/86
(43) Veröffentlichungstag der Anmeldung: 19.08.1987
(73) Patentinhaber: INTERPROFIL GFK-Fenster & Bausysteme Gesellschaft m.b.H., A-3192 Hohenberg (AT)
(72) Erfinder: Röck, Siegfried, A-1010 Wien (AT); Wertitsch, Werner, A-1010 Wien (AT)
(74) Vertreter: Pawloy, Heinrich, Dr.

(56) Entgegenhaltungen:
- EP-A- 0 087 515
- DE-A- 1 434 239
- DE-A- 1 704 787
- DE-A- 2 729 219
- DE-B- 1 168 627
- FR-A- 1 197 466
- FR-A- 1 501 988
- FR-A- 1 602 375
- FR-A- 2 116 705
- US-A- 3 895 896
- US-A- 3 954 379

## Beschreibung

Die Erfindung bezieht sich auf ein Fensterrahmenprofil gemäß dem Oberbegriff von Anspruch 1 sowie auf ein Verfahren zur Herstellung eines Fensterrahmenprofils gemäß dem Oberbegriff von Anspruch 10.

Ein derartiges Fensterrahmenprofil ist aus der DE-A-1 704 787 bekannt, wobei allerdings der eigentliche, kastenförmige Hohlprofilkörper mit einer Verstärkung aus Glasfaserbändern gebildet ist und nur ein angeformter, seitlich abstehender Steg mit Vollquerschnitt eine Glasfaserstrang-Armierung aufweist.

Aus der EP-A-87 515 ist eine Profilleiste für Fenster- oder Türrahmen bekannt, die aus einem mit kurzen Glasfasern verstärkten Thermoplast-Kern und einer um diesen Kern herum durch Co-Extrusion geformten, gegebenenfalls mit Nuten und Stegen versehenen Thermoplast-Ummantelung besteht. Die Profilleiste kann dabei auch eine allgemein L-förmige Querschnittsform sowie mehrere sich längserstreckende Hohlräume aufweisen.

Die FR-A-1 197 466 beschreibt schließlich ein Verfahren zur Herstellung von Profilstangen mit Vollquerschnitt, wobei sowohl Längsfasern als auch ein Glasfaserband zur Verstärkung des Profils eingebaut werden.

Es ist Ziel der vorliegenden Erfindung, ein Fensterrahmenprofil vorstehend angeführter Art zu schaffen, welches bei geringen Querschnittsabmessungen, insbesondere bei geringer Profilbreite, eine hohe Formsteifigkeit und eine hohe Festigkeit besitzt, und welches auch auf einfache Weise zu Fensterrahmen, und zwar sowohl zu Flügelrahmen als auch zu Stock- bzw. Blendrahmen, zusammengefügt werden kann und ein einfaches und konstruktiv vorteilhaftes Unterbringen von Beschlagteilen, Dichtungsleisten und dergl. ermöglicht. Weiters ist es Aufgabe der Erfindung, ein Verfahren der vorstehend angeführten Art vorzusehen, welches eine rasche und wirtschaftliche Fertigung der erfindungsgemäß ausgebildeten Profile ermöglicht.

Diese Aufgabe wird beim vorliegenden Fensterrahmenprofil durch die Maßnahmen gemäß Anspruch 1 bzw. beim vorliegenden Verfahren mit den Maßnahmen gemäß Anspruch 10 gelöst. Durch die beim erfindungsgemäßen Profil vorgesehene Struktur wird eine hohe Festigkeit bei geringem Materialquerschnitt erzielt, was zu einem Kleinhalten der Profilbreite und damit zu einer Verbesserung des Lichtdurchtritts bei gegebenen Fenstergesamtabmessungen genutzt werden kann. Zufolge der hohen Festigkeit kann das gleiche Profil nicht nur für die Herstellung von Flügelrahmen, sondern auch für die Herstellung von Stockrahmen eingesetzt werden. Die im Längsschenkel und im Querschenkel des Profils vorgesehenen geschlossenen Hohlräume sind hinsichtlich des Erzielens einer möglichst guten Steifigkeit und eines möglichst geringen Wärmedurchgangs günstig und weiter auch beim Anbringen von Beschlagteilen mit Schrauben, welche in das Profilmaterial eindringen, von Vorteil, da solche Schrauben in die Hohlräume ragen können. Die Hinterschneidungen der an der Umfangsfläche des Profils vorgesehenen Nuten erleichtern den Einbau von Beschlagteilen und Dichtungen und lassen auf einfache Weise einen guten Sitz derselben erzielen.

Das erfindungsgemäße Verfahren ermöglicht eine wirtschaftliche und exakte Herstellung des Profils, wobei die Führung der längslaufenden Faserstränge dahingehend, daß sie die beiden Dorne umgeben und die Hinterschneidungen füllen, für die hervorragenden Festigkeitseigenschaften des Profils bedeutsam sind.

Vorteilhafte Ausführungsformen des erfindungsgemäßen Fensterrahmenprofils sind Gegenstand der Ansprüche 2 bis 9. Vorteilhafte Ausführungsformen des erfindungsgemäßen Verfahrens sind in den Ansprüchen 11 bis 15 gekennzeichnet. Die Erfindung wird nun unter Bezugnahme auf die Zeichnung, in der Beispiele erfindungsgemäß ausgebildeter Profile und mit solchen Profilen gebildeter Fenster sowie Einrichtungen zur Durchführung des erfindungsgemäßen Verfahrens schematisch dargestellt sind, weiter erläutert.

In der Zeichnung zeigen:
Die Fig. 1 bis 4 Ausführungsformen erfindungsgemäß ausgebildeter Profile im Qerschnitt,
Fig. 5 in schematischer Darstellung ein Beispiel einer zur Durchführung des erfindungsgemäßen Verfahrens eingesetzten Vorrichtung zusammen mit dem bei einer Ausführungsform des erfindungsgemäßen Verfahrens vorgesehenen Verfahrensablauf,
Fig. 6 ein Detail einer Variante einer zur Durchführung des erfindungsgemäßen Verfahrens vorgesehenen Vorrichtung, und
Fig. 7 ein Detail einer weiteren Variante einer derartigen Vorrichtung;
Fig. 8 zeigt die beim Herumlegen eines Faserstranges um ein Bündel von axial verlaufenden Fasersträngen vorliegende Geometrie;
die Fig. 9 bis 11 zeigen Teile von Ausführungsformen erfindungsgemäß ausgebildeter Fenster im Querschnitt.

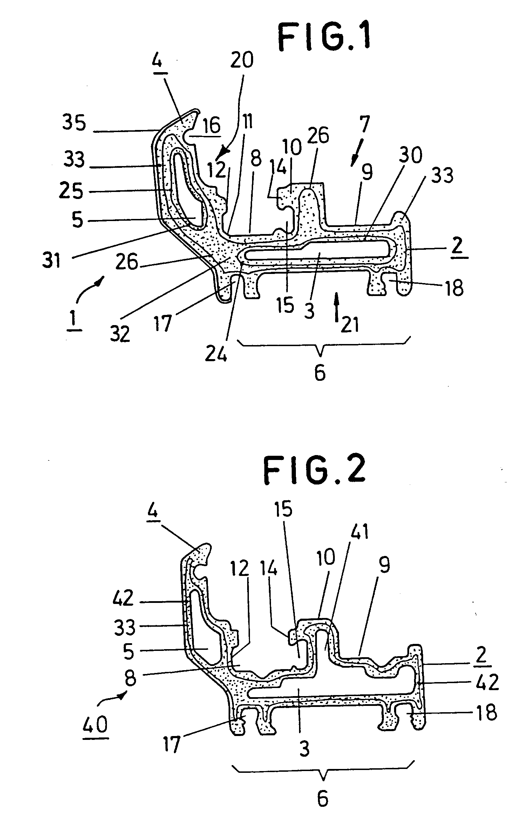

In Fig. 1 ist ein Fensterrahmenprofil 1 im Querschnitt dargestellt, welches annähernd L-förmig ausgebildet ist. Das Profil 1 weist im Längsschenkel 2 einen geschlossenen Hohlraum 3 und im Querschenkel 4 einen geschlossenen Hohlraum 5 auf. Der im Längsschenkel 2 vorgesehene Hohlraum 3 reicht im wesentlichen über die ganze Längserstreckung 6 dieses Schenkels 2. An der Innenseite 7 des Längsschenkels 2 weist das Profil 1 zwei annähernd je über die Hälfte der Länge 6 des Längsschenkels reichende Nuten 8, 9 auf, die durch eine Mittelrippe 10 voneinander getrennt sind. Die Nut 8 schließt dabei an die Übergangsecke 11 zum Querschenkel 4 an, und es sind die Seitenwände 12, 14 der Nut 8 hinterschnitten ausgebildet. In der zur Profilmitte hin gelegenen Nutseitenwand 14 ist eine von dieser Nut 8 ausgehende hinterschnittene Seitennut 15 vorgesehen. An der Umfangsfläche des Profils sind noch weitere, gleichfalls mit Hinterschneidungen ausgebildete Nuten 16, 17, 18 vorgesehen, wobei die Nut 16 an der Innenseite 20 des Querschenkels 4 und die Nuten 17, 18 an der Außenseite 21 des Längsschenkels 2 angeordnet sind. Die vorerwähnten Nuten dienen zur Aufnahme bzw. Befestigung von Zusatzprofilleisten, Dichtleisten und dergl. sowie von Beschlagteilen bei der Herstellung der Rahmen von Fenstern und Türen aus einem solchen Profil.

Das Profil 1 besteht aus einem Duroplastmaterial, welches durch Faserstränge, und zwar insbesondere Glasfaserrovings, verstärkt ist. Zur Verstärkung sind dabei sowohl Faserstränge vorgesehen, welche in Längsrichtung des Profils, also senkrecht zur Zeichenebene, verlaufen als auch Faserstränge, welche in Umfangsrichtung verlaufen. Es sind dabei in Umfangsrichtung verlaufende Faserstränge 24 vorgesehen, welche um den Hohlraum 3 verlaufen, ferner in Umfangsrichtung verlaufende Faserstränge 25, welche um den Hohlraum 5 verlaufen, und weiter noch in Umfangsrichtung verlaufende Faserstränge 26, welche um beide Hohlräume 3, 5 verlaufen und in grober Annäherung der Umfangsfläche 27 des Profils 1 folgen. Die in Umfangsrichtung verlaufenden Faserstränge 24 umgeben dabei ein Teilbündel 30 der längslaufenden Faserstränge, welches seinerseits den Hohlraum 3 umgibt, und es umgeben die in Umfangsrichtung verlaufenden Faserstränge 25 ein Teilbündel 31 längslaufender Faserstränge, welches seinerseits den Hohlraum 5 umgibt. Die in Umfangsrichtung verlaufenden Faserstränge 26 umgeben die Teilbündel 30 und 31 der längslaufenden Faserstränge sowie weitere längslaufende Faserstränge, die ein außerhalb der in Umfangsrichtung verlaufenden Faserstränge 24 und 25 liegendes Teilbündel 32 bilden. Auf die äußeren, in Umfangsrichtung verlaufenden Faserstränge 26 folgen noch axial verlaufende Faserstränge, welche eine Lage 33 bilden, die die in Umfangsrichtung verlaufenden Faserstränge 26 nach außen abdeckt. Gewünschtenfalls kann auf die Lage 33 eine Schicht aus Kunststoffmaterial folgen, welches bei der Herstellung eines solchen Profils in das formgebende Formwerkzeug eingespritzt wird.

An den außen gelegenen Sichtflächen des Querschenkels 4 trägt das Profil 1 ein Holzfurnier 35, welches durch eine Klebeverbindung oder durch Anbettung mit dem Duroplastmaterial des Profils verbunden ist.

Das in Fig. 2 dargestellte Profil 40 ist eine hinsichtlich seiner äußeren Form ähnliche Variante des in Fig. 1 dargestellten Profils 1. Es hat auch das Profil 40 einen annähernd L-förmigen Querschnitt und einen geschlossenen Hohlraum 3 im Längsschenkel 2 und einen geschlossenen Hohlraum 5 im Längsschenkel 4 des Profils. Der im Längsschenkel 2 vorgesehene Hohlraum 3 reicht im wesentlichen über die ganze Längserstreckung 6 des Schenkels 2, und es ist die zwischen den Nuten 8 und 9 liegende Mittelrippe 10 als Hohlrippe ausgebildet, deren Hohlraum 41 eine Ausbuchtung des Hohlraums 3 ist. Es sind im Duroplastmaterial, aus dem das Profil 40 gebildet ist, durch Punkte angedeutete längslaufende Faserstränge und weiter in Umfangsrichtung verlaufende Faserstränge 42 eingebettet, welche einen Teil der längslaufenden Faserstränge umgeben und um die Hohlräume 3 und 5 geführt sind. Außerhalb der in Umfangsrichtung verlaufenden Faserstränge 42 ist eine aus längslaufenden Fasersträngen gebildete Lage 33 vorgesehen, welche die in Umfangsrichtung verlaufenden Faserstränge 42 nach außen hin abdeckt.

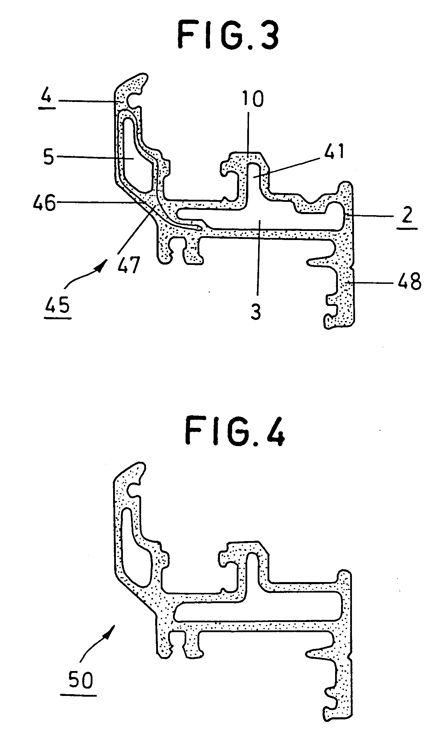

Fig. 3 zeigt ein Profil 45, welches eine weitere Variante zu dem in Fig. 1 dargestellten Profil ist. Beim Profil 45 ist eine Querverstärkung nur im Bereich des Hohlraums 5 des Querschenkels 4 in Form von Fasersträngen 46 vorgesehen, welche um den Hohlraum 5 und um ein Teilbündel 47 längslaufender Faserstränge, welches seinerseits den Hohlraum 5 umgibt, verlaufen. Die Mittelrippe 10 des Profils 45 ist analog wie die Mittelrippe des in Fig. 2 dargestellten Profils 40 als Hohlrippe ausgebildet, deren Hohlraum 41 eine Ausbuchtung des Hohlraumes 3 des Längsschenkels 2 ist. An das freie Ende des Längsschenkels 2 des Profils 45 ist eine Außenleiste 48 angeformt, welche zur Befestigung von Glastafeln, Füllungen oder dergl. in Rahmen, welche aus einem Profil 45 zusammengefügt sind, dienen kann.

Fig. 4 zeigt ein dem Profil 45 ähnliches Profil 50, bei dem im Duroplastmateral, aus dem das Profil gebildet ist, keine in Umfangsrichtung verlaufenden Faserstränge vorgesehen sind.

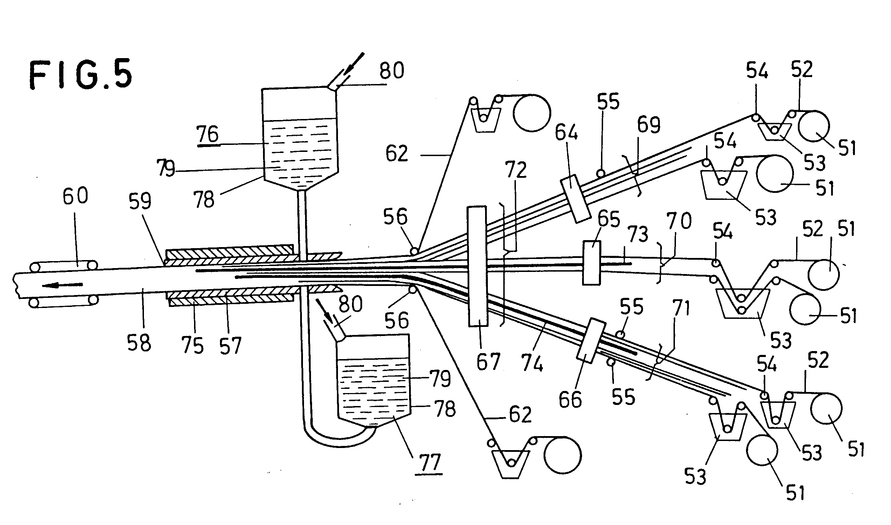

Bei der in Fig. 5 dargestellten Vorrichtung zur Durchführung des erfindungsgemäßen Verfahrens ist eine Anzahl von Vorratsspulen 51 in geeigneten Lagern angeordnet; auf diesen Vorratsspulen befindet sich ein Vorrat an Fasersträngen 52, welche vorzugsweise durch sog. Rovings gebildet sind. Die Faserstränge 52 werden durch Tränkeinrichtungen 53 hindurchgeführt und in diesen Tränkeinrichtungen mit einem duroplastisch erhärtenden Kunstharz getränkt. Die Faserstränge 52 werden nach dem Austritt aus den Tränkeinrichtungen 53 durch Führungen 54, welche am Ausgang der Tränkeinrichtungen 53 vorgesehen sind und gegebenenfalls durch weitere Führungen 55, 56 zusammenlaufend gelenkt, damit sie sich zu einem Bündel vereinigen, welches axial in eine langgestreckt ausgebildete Durchlaufhohlform 57 eintritt, in der das Kunstharz, mit dem die Faserstränge 52 getränkt worden sind, zum Erhärten gebracht wird, so daß in dieser Hohlform aus einem Bündel kunstharzgetränkter Faserstränge 52 ein erhärteter Profilstrang 58 entsteht, und es wird dieser Profilstrang 58 fortlaufend von der Austrittsöffnung 59 der Durchlaufhohlform 57 weg abgezogen; für dieses Abziehen kann man z.B. einen Rollen- oder Raupenabzug 60 vorsehen, wobei der aus der Durchlaufhohlform 57 austretende Profilstrang nach dem Passieren dieses Abzuges 60 in Stücke geeigneter Länge unterteilt wird. Die in Fig. 5 dargestellte Vorrichtung weist weiter Ringwickeleinrichtungen 64, 65, 66, 67 auf, mit denen Teilbündel 69, 70, 71, 72, die je aus einer größeren Anzahl bereits getränkter Faserstränge 52 bestehen, falls gewünscht mit Fasersträngen umwunden werden können, welche rings um die betreffenden Teilbündel, also in Umfangsrichtung derselben, verlaufen. Im dargestellten Fall bilden die Teilbündel 69, 70 und 71 zusammen das Teilbündel 72 und es kann demgemäß mit der Ringwickeleinrichtung 67 um die bereits mit in Umfangsrichtung verlaufenden Fasersträngen umwundenen Teilbündel 69, 70, 71 eine weitere Lage von Fasersträngen, welche in Umfangsrichtung verlaufen aufgebracht werden. Auf diese Lage kann eine weitere Lage axial verlaufender vorgetränkter Faserstränge 62, welche die Oberflächenschicht des herzustellenden Profils bilden, aufgelegt werden, und es wird das so aus Fasersträngen gebildete Bündel axial in die Durchlaufhohlform 57 eingeführt.

Der Innenraum der Durchlaufhohlform 57 ist konform zur herzustellenden Form des Profiles bzw. Profilstranges 58 ausgebildet.

Zur Bildung der axial verlaufenden Hohlräume im Profilstrang 58 sind in die Durchlaufhohlform 57 entsprechende Dorne 73, 74 eingesetzt.

An die Durchlaufhohlform 57, welche mit einem Heizmantel 75 versehen ist, sind weiter zwei Injektionseinrichtungen 76, 77 angeschlossen, mit denen Kunstharzmaterial in das Innere der Durchlaufhohlform 57 injiziert werden kann; diese Injektionsvorrichtungen weisen einen Vorratsbehälter 78 für das Kunstharzmaterial 79 auf, und es ist vorgesehen dieses Kunstharzmaterial mit einem Druckmedium, insbesondere Druckluft, welches durch einen Anschluß 80 zugeführt wird, in die Durchlaufhohlform 57 zu pressen. Es kann auch mit einer einzigen Injektionseinrichtung gearbeitet werden.

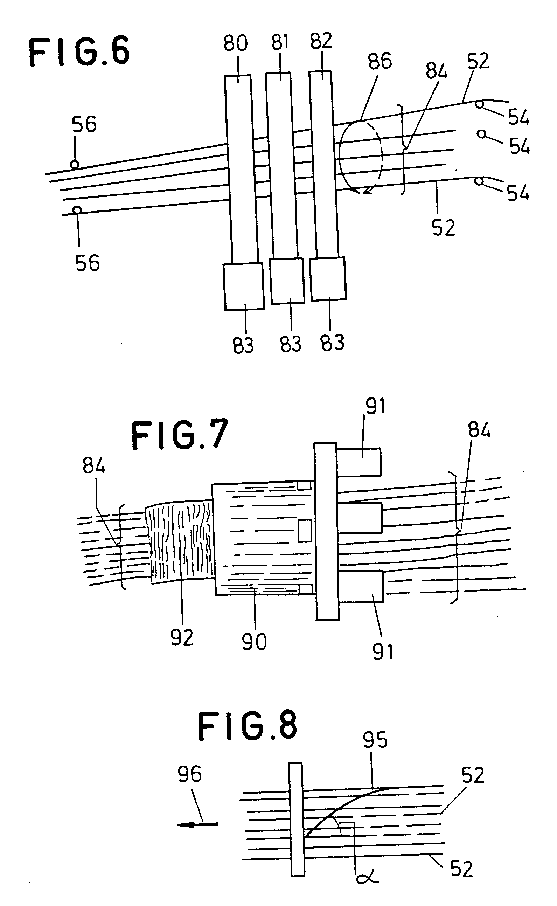

Anstelle einfacher Ringwickeleinrichtungen, wie sie bei der in Fig. 5 dargestellten Vorrichtung vorgesehen sind, kann man für das Aufbringen von in Umfangsrichtung verlaufenden Fasersträngen auf die aus axial verlaufenden Fasersträngen bestehenden Bündel oder Teilbündel auch Ringwickeleinrichtungen vorsehen, welche gleichzeitig mehrere Faserstränge in Umfangsrichtung um das zu umwindende Bündel legen. Eine solche Einrichtung ist schematisch in Fig. 6 dargestellt and weist mehrere Ringwickelaggregate 80, 81, 82 auf, die mit je einem Antrieb 83 versehen sind. Diese Ringwickelaggregate 80, 81, 82, durch die das zu umwindende Bündel, welches aus axial verlaufenden Fasersträngen besteht, hindurchgeführt wird, können dabei entweder in gleicher Drehrichtung oder in verschiedenen Drehrichtungen angetrieben werden, wobei in letzterem Fall Umwindungen mit zueinander entgegengesetztem Windungssinn gebildet werden.

Durch geeignete Positionierung der die axial verlaufenden Faserstränge 52 lenkenden Führungen 54 und 56 und durch geeignete Positionierung der Ringwickeleinrichtung in bezug auf diese Führungen kann erreicht werden, daß der an der Stelle der Ringwickeleinrichtung vorliegende Umfang 86 des Bündels 84 der Umfangslänge der das Bündel 84 im fertiggestellten Profil umgebenden Schicht entspricht.

Um bei der Herstellung von Profilen mit stark zerklüfteter Form eine gute Anpassung von aus in Umfangsrichtung verlaufenden Fasersträngen gebildeten Lagen an die Profilform zu erzielen, kann man vorteilhaft zur Bildung der in Umfangsrichtung verlaufenden Faserstränge ein schlauchartiges Rundgestrick herstellen, welches das betreffende Bündel oder Teilbündel aus in Axialrichtung verlaufenden Fasersträngen umgibt. Hiezu kann man, wie Fig. 7 zeigt, an einer zur Durchführung des erfindungsgemäßen Verfahrens vorgesehen Vorrichtung ein Rundstrickaggregat 90 anordnen, welches von einer oder mehreren ringförmigen Garnvorratsspulen 91 mit Fasersträngen versorgt wird und durch das das aus axial verlaufenden Fasersträngen gebildete Bündel 84, welches mit in Umfangsrichtung verlaufenden Fasersträngen umgeben werden soll, hindurchgeführt wird, wobei fortlaufend im Aggregat 90 ein schlauchartiges Rundgestrick 92 erzeugt wird, welches das Bündel 84 umgibt.

Werden in Umfangsrichtung verlaufende Faserstränge mit einer ortsfest angeordneten Wickeleinrichtung um ein Bündel axial verlaufender Faserstränge 52 herumgelegt, so ergibt sich ein schraubenlinienförmiger Verlauf der Faserstränge 95, welche das aus den axial verlaufenden Faserstränge 52 bestehende Bündel umgeben, wie dies in Fig. 8 schematisch angedeutet ist. Je nach der Geschwindigkeit mit der die axial verlaufenden Faserstränge 52 im Sinn des Pfeils 96 zur Durchlaufhohlform wandern und je nach der Geschwindigkeit der Drehung, mit der die in Umfangsrichtung verlaufenden Stränge 95 um das aus den axial verlaufenden Fasersträngen 52 bestehende Bündel gelegt werden, ergibt sich eine bestimmte Größe des Winkels α zwischen den die Außenlage des Bündels bildenden axial verlaufenden Fasersträngen 52 und den in Umfangsrichtung verlaufenden Fasersträngen 95. Es wird dabei zweckmäßig die Laufgeschwindigkeit der Faserstränge 52 und die Umlaufgeschwindigkeit der Ringwickeleinrichtung so aufeinander abgestimmt, daß dieser Winkel im Bereich zwischen 10° und 60° liegt, wobei ein Winkel von etwa 45° in der Praxis vorteilhaft ist.

Als weitere Variante zur Bildung einer ein Bündel aus axial verlaufenden Fasern umgebenden Lage aus Fasersträngen, welche in Umfangsrichtung um dieses Bündel verlaufend gewunden sind, kann man ein solches Bündel auch mit einem Rundgeflecht umgeben, welches durch ein Flechtaggregat aus einer Anzahl von Fasersträngen gebildet wird.

Weiter kommt zur Bildung der in Umfangsrichtung verlaufenden Faserstränge auch das Herumlegen eines axial mit dem zu umgebenden Bündel der Durchlaufhohlform zugeführten Streifens in Betracht, in dem eine Schar von Fasersträngen bzw. Faserstrangabschnitten vorliegt, welche nach dem Herumlegen dieses Streifens um das zu umgebende Bündel in Umfangsrichtung verlaufen.

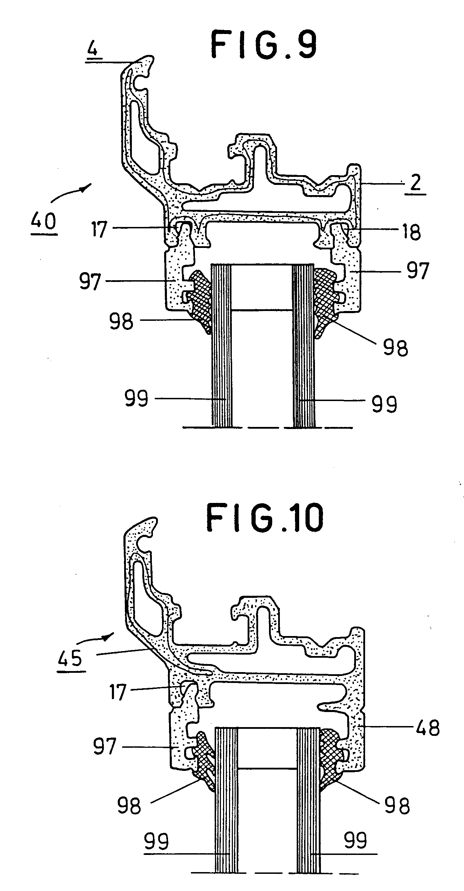

Fig. 9 zeigt einen Teil eines Fensters, welches mit einem nach Fig. 2 ausgebildeten Fensterrahmenprofil hergestellt ist, im Schnitt. Es bildet dabei der Querschenkel 4 des Fensterrahmenprofils 40 den Anschlag des Fensterrahmens an einen nicht näher dargestellten Stockrahmen, und es erfolgt die Verbindung des Fensterrahmens mit der Glasscheibe vom Längsschenkel 2 des Fensterrahmenprofils 40 aus. Hiezu sind in die Nuten 17, 18, die am Längsschenkel 2 angeformt sind, Zusatzprofilleisten 97 eingesetzt, welche unter Zwischenfügung von Dichtleisten 98 Glastafeln 99 festhalten.

Fig. 10 zeigt ein Fenster, dessen Rahmen unter Verwendung eines Rahmenprofils nach Fig. 3 hergestellt ist, wobei dieses Fenster eine Variante zu dem in Fig. 9 dargestellten bildet. Ein Unterschied gegenüber dem Fenster nach Fig. 9 liegt dabei darin, daß das Fensterrahmenprofil 45 an einer Seite eine angeformte Außenleiste 48 trägt, welche unter Zwischenfügung einer Dichtleiste 98, die aus den Glastafeln 99 bestehende Verglasung nach der einen Seite hin abstützt und hält. Nach der anderen Seite hin wird, analog wie dies bei dem in Fig. 9 dargestellen Fenster der Fall ist, die Verglasung durch eine Zusatzprofilleiste 97, welche in die Nut 17 des Rahmenprofils 45 eingesetzt ist, unter Zwischenfügung einer Dichtleiste 98 abgestützt bzw. festgehalten.

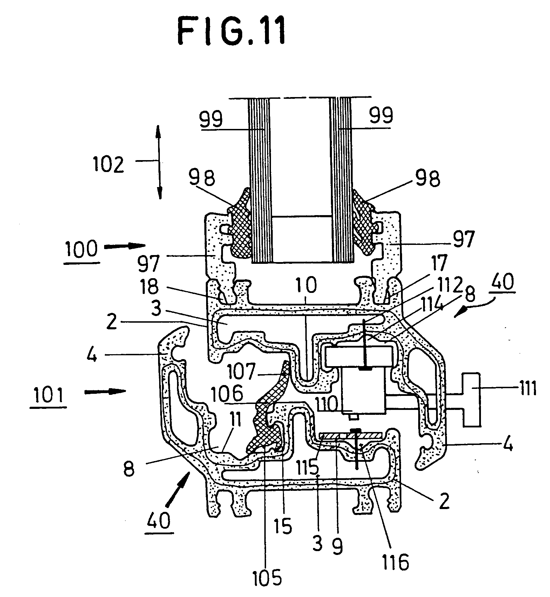

In Fig. 11 ist der Rahmenbereich einer Ausführungsform eines Fensters im Schnitt dargestellt, welches einen Flügelrahmen und einen Stockrahmen aufweist, wobei der Flügelrahmen 100 und der Stockrahmen 101 aus Stücken eines Rahmenprofils nach Fig. 2 zusammengefügt sind. Sowohl beim Flügelrahmen 100 als auch beim Stockrahmen 101 verläuft der Querschenkel 4 der Profile 40 parallel zu der durch den Doppelpfeil 102 angedeuteten Fensterebene und der Längsschenkel 2 dieser Profile verläuft senkrecht zu dieser Ebene; dabei ist angenommen, daß sich der Flügelrahmen in der in Fig. 11 dargestellten Lage befindet. Die Profile des Flügelrahmens 100 stehen den Profilen des Stockrahmens 101 in um 180° gewendeter Lage gegenüber. Die aus Glastafeln 99 bestehende Verglasung ist analog wie bei der Ausführungsform nach Fig. 9 im Flügelrahmenprofil mit Zusatzprofilleisten 97, welche in die Nuten 17, 18 des Flügelrahmenprofils eingesetzt sind, unter Zwischenfügung von Dichtleisten 98 festgehalten. In die hinterschnittene Seitennut 15 des den Stockrahmen 101 bildenden Profils ist eine mit Halterillen 105 versehene Dichtleiste 106 eingesetzt, welche eine aus der Nut 8 des Stockrahmenprofils hinausragende Dichtlippe 107 aufweist, die bei geschlossenem Fenster an der Mittelrippe 10 des Flügelrahmenprofils anliegt. In der Nut 8 des Flügelrahmenprofils, welche an die Übergangsecke 11 dieses Profils anschließt, sind Beschlagteile 110, welche Betätigungshandhaben 111 tragen, befestigt. Die Befestigung erfolgt mit Schrauben 112 welche in den Boden der Nut 8, in dem eine Rille 114 vorgesehen ist, eingeschraubt sind und in den Hohlraum 3 ragen. Korrespondierend dazu sind in der Nut 9 des Stockrahmens 101 Beschlaggegenstücke 115 angebracht und gleichfalls mittels Schrauben befestigt, welche in den mit einer Rille 116 versehenen Boden der Nut 9 eingeschraubt sind.

In ähnlicher Weise, wie dies vorstehend unter Bezugnahme auf die Fig. 9 bis 11 erläutert ist, können die erfindungsgemäß ausgebildeten Rahmenprofile auch zur Herstellung von Flügelrahmen und Stockrahmen von Türen verwendet werden. Sofern dabei bei den Türflügeln ein Lichtdurchtritt nicht benötigt wird, kann man den Innenraum des Flügelrahmens solcher Türen auch mit lichtundurchlässigen Tafeln oder dergl. ausfüllen, wobei solche Tafeln ähnlich wie die Verglasungen der vorstehend beschriebenen Fenster unter Benützung der am Profil vorhandenen Nuten im Flügelrahmen festgehalten werden können.

## Patentansprüche

1. Fensterrahmenprofil (1; 40; 45; 50), welches einstückig ausgebildet und an seiner Umfangsfläche (20, 7, 21) mit einer Anzahl von Nuten, Ausnehmungen oder dergl. (8, 9, 16, 17, 18) versehen ist, in welchen Zusatzprofilleisten, Dichtleisten und dergl. und Beschlagteile befestigbar sind, welches Profil aus einem mit langslaufenden Fasersträngen, insbesondere Glasfaserrovings, verstärkten Duroplastmaterial besteht und mindestens einen geschlossenen, längslaufenden Hohlraum (3, 5) aufweist, dadurch gekennzeichnet, daß das Profil (1; 40; 45; 50) mit annähernd L-förmigem Querschnitt ausgebildet ist und einen geschlossenen Hohlraum (3) im Längsschenkel (2) der L-Form und einen geschlossenen Hohlraum (5) im Querschenkel (4) der L-Form aufweist, daß die an der Umfangsfläche des Profils vorgesehenen Nuten (8, 16, 17, 19) mit Hinterschneidungen ausgebildet sind, und daß die längslaufenden Faserstränge über den ganzen Profilquerschnitt verteilt, auch in den Hinterschneidungen der Umfangsfläche (20, 7, 21) des Profils, vorgesehen sind.

2. Fensterrahmenprofil nach Anspruch 1, dadurch gekennzeichnet, daß der im Längsschenkel (2) der L-Form vorgesehene Hohlraum (3) im wesentlichen über die ganze Längserstreckung (6) dieses Schenkels (2) reicht.

3. Fensterrahmenprofil nach Anspruch 1 oder 2, dadurch gekennzeichnet, daß das Profil (1; 40; 45; 50) an der Innenseite (7) des Längsschenkels (2) zwei annähernd je über die Hälfte der Länge (6) des Längsschenkels (2) reichende Nuten (8, 9) aufweist, die durch eine Mittelrippe (10) voneinander getrennt sind.

4. Fensterrahmenprofil nach Anspruch 3, dadurch gekennzeichnet, daß die Mittelrippe (10) als Hohlrippe ausgebildet ist, deren Hohlraum (41) eine Ausbuchtung eines über die Längserstreckung (6) des Längsschenkels (2) des Profiles reichenden Hohlraumes (3) ist.

5. Fensterrahmenprofil nach Anspruch 1, dadurch gekennzeichnet, daß das Profil (1; 40) an der Innenseite (7) des Längsschenkels (2), an die übergangsecke (11) zum Querschenkel (4) anschließend, eine mit hinterschnittenen Seitenwänden (12, 14) ausgebildete Nut (8) aufweist, in deren zur Mitte des Längsschenkels hin gelegenen Nutseitenwand (14) eine von dieser Nut (8) ausgehende, hinterschnittene Seitennut (15) vorgesehen ist.

6. Fensterrahmenprofil nach einem der Ansprüche 1 bis 5, dadurch gekennzeichnet, daß im Duroplastmaterial des Profils (1; 40; 45) sowohl in Längsrichtung verlaufende Faserstränge eingebettet sind als auch eine Querverstärkung eingebettet ist, welche Faserstränge (24, 25, 26; 42; 46) aufweist, die in Umfangsrichtung um einen Teil der längsverlaufenden Faserstränge oder um alle längslaufenden Faserstränge verlaufen.

7. Fensterrahmenprofil nach Anspruch 6, dadurch gekennzeichnet, daß die in Umfangsrichtung verlaufenden Faserstränge (95) schraubenlinienartig gewunden verlaufen.

8. Fensterrahmenprofil nach Anspruch 7, dadurch gekennzeichnet, daß die in Umfangsrichtung verlaufenden Faserstränge (24, 25, 26; 42; 46; 95) mindestens um einen geschlossenen Hohlraum (3, 5) verlaufen.

9. Fensterrahmenprofil nach einem der Ansprüche 1 bis 8, dadurch gekennzeichnet, daß das Profil an den außen gelegenen Sichtflächen ein Holzfurnier (35) trägt, welches durch eine Klebeverbindung oder durch Anbettung mit dem Duroplastmaterial des Profils verbunden ist.

10. Verfahren zur Herstellung eines Fensterrahmenprofils, bei welchem Verfahren zur Bildung des Fensterrahmenprofils eine Vielzahl von Fasersträngen fortlaufend mit einem duroplastisch erhärtenden Kunstharz, vorzugsweise Polyester, getränkt wird und die Faserstränge, insbesondere Glasfaserrovings, zum axialen Eintritt in eine langgestreckte Durchlaufhohlform, welche eine der Umfangsfläche des herzustellenden Profils entsprechende innere Formfläche hat, sich zu einem diese Durchlaufhohlform ausfüllenden Bündel vereinigend geführt werden, das Kunstharz in der Durchlaufhohlform zum Erhärten gebracht wird und der in der Durchlaufhohlform erhärtete Profilstrang fortlaufend von der Austrittsöffnung der Durchlaufhohlform weg abgezogen wird, dadurch gekennzeichnet, daß zur Bildung eines einstückigen Fensterrahmenprofils, welches einen annähernd L-förmigen Querschnitt mit einem geschlossenen Hohlraum (3) im Längsschenkel (2) der L-Form und einem geschlossenen Hohlraum (5) im Querschenkel (4) der L-Form aufweist und an seiner Umfangsfläche mit einer Anzahl von Nuten, Ausnehmungen oder dergl. versehen ist, in welchen Zusatzprofilleisten, Dichtleisten und dergl. und Beschlagteile befestigbar sind, wobei die an der Umfangsfläche des Profils vorgesehenen Nuten (8, 16, 17, 19) mit Hinterschneidungen ausgebildet sind, die längslaufenden Faserstränge mindestens zwei Dorne umgebend geführt werden, welche Dorne nebeneinanderliegend zur Bildung der Hohlräume des Fensterrahmenprofils in die Durchlaufhohlform eingesetzt sind, und daß die längslaufenden Faserstränge auch die Hinterschneidungen an der Umfangsfläche des Profils füllend geführt werden, welche Hinterschneidungen durch korrespondierende Hinterschneidungsflächen der Durchlaufhohlform geformt werden.

11. Verfahren nach Anspruch 10, dadurch gekennzeichnet, daß das gesamte Bündel der in die Durchlaufhohlform geführten axial verlaufenden Faserstränge und/oder eines oder beide Teilbündel, die die Dorne umgehend axial verlaufend geführt werden, auf dem Weg von der Tränkung zur Durchlaufhohlform fortlaufend mit einem oder mehreren Fasersträngen umgeben wird, die in Umfangsrichtung um das genannte Bündel axial gerichteter Faserstränge bzw. das oder die Teilbündel verlaufen.

12. Verfahren nach Anspruch 11, dadurch gekennzeichnet, daß eines oder beide Teilbündel fortlaufend mit einem oder mehreren in Umfangsrichtung verlaufenden Fasersträngen umgeben werden, und daß diese(s) Teilbündel zusammen mit einer Anzahl weiterer Faserstränge, die im wesentlichen wie die axialen Faserstränge des genannten Teilbündels verlaufen, nochmals fortlaufend mit einem oder mehreren in Umfangsrichtung verlaufenden Fasersträngen umgeben wird.

13. Verfahren nach Anspruch 11 oder 12, dadurch gekennzeichnet, daß auf die äußere Lage der in Umfangsrichtung verlaufenden Faserstränge folgend eine diese Lage nach außen abdeckende Lage axial verlaufender Faserstränge in dem in die Durchlaufhohlform eingeführten Bündel von Fasersträngen vorgesehen wird.

14. Verfahren nach einem der Ansprüche 11 bis 13, dadurch gekennzeichnet, daß um das Bündel oder Teilbündel axial gerichteter Faserstränge ein dieses Bündel oder Teilbündel schlauchartig umgebendes Rundgeflecht gebildet wird, das die in Umfangsrichtung verlaufenden Faserstränge darstellt.

15. Verfahren nach einem der Ansprüche 11 bis 13, dadurch gekennzeichnet, daß zur Bildung der in Umfangsrichtung verlaufenden Faserstränge ein das Bündel oder ein Teilbündel axial gerichteter Faserstränge schlauchartig umgebendes Rundgestrick aus einem oder mehreren Fasersträngen hergestellt wird.

## Claims

1. A window frame profile (1; 40; 45; 50) designed in one piece and having on its peripheral surface (20, 7, 21) a plurality of grooves, recesses or the like (8, 9, 16, 17, 18) for fastening additional profiled strips, sealing strips and the like and trims therein, which profile is made of duroplast material reinforced by longitudinally extending fibre strands, in particular glass fibre rovings, and comprises at least one closed longitudinal cavity (3, 5), characterized in that the profile (1; 40; 45; 50) has an approximately L-shaped cross section and comprises a closed cavity (3) in the longitudinal leg (2) of the L shape and a closed cavity (5) in the cross leg (4) of the L shape, that the grooves (8, 16, 17, 19) provided on the peripheral surface of the profile are provided with undercuts, and that the longitudinal fibre strands are provided in a manner distributed over the entire cross section of the profile, even in the undercuts of the peripheral surface (20, 7, 21) of the profile.

2. A window frame profile according to claim 1, characterized in that the cavity (3) provided in the longitudinal leg (2) of the L shape extends substantially over the entire longitudinal extension (6) of said leg (2).

3. A window frame profile according to claim 1 or 2, characterized in that the profile (1; 40; 45; 50), on the internal side (7) of the longitudinal leg (2), comprises two grooves (8, 9) each extending roughly over half of the length (6) of the longitudinal leg (2), said grooves being separated by a central rib (10).

4. A window frame profile according to claim 3, characterized in that the central rib (10) is configured as a hollow rib whose cavity (41) is an indentation of a cavity (3) extending over the longitudinal extension (6) of the longitudinal leg (2) of the profile.

5. A window frame profile according to claim 1, characterized in that the profile (1; 40), on the internal side (7) of the longitudinal leg (2), comprises a groove (8) following upon the transition corner (11) to the cross leg (4) and including undercut side walls (12, 14), an undercut lateral groove (15) that departs from said groove (8) being provided in the groove side wall (14) located towards the centre of the longitudinal leg.

6. A window frame profile according to any one of claims 1 to 5, characterized in that both longitudinally extending fibre strands and a transverse reinforcement are embedded in the duroplast material of the profile (1; 40; 45), which transverse reinforcement comprises fibre strands (24, 25, 26; 42; 46) extending in the peripheral direction about part of the longitudinally extending fibre strands or about all of the longitudinally extending fibre strands.

7. A window frame profile according to claim 6, characterized in that the fibre strands (95) extending in the peripheral direction are helically wound.

8. A window frame profile according to claim 7, characterized in that the fibre strands (24, 25, 26; 42; 46; 95) extending in the peripheral direction extend at least about one closed cavity (3, 5).

9. A window frame profile according to any one of claims 1 to 8, characterized in that the profile carries a wooden veneer (35) on its external visible surfaces, said veneer being bonded to the duroplast material of the profile by adhesive bonding or by embedding.

10. A process for the manufacture of a window frame profile, wherein, for the formation of the window frame profile, a plurality of fibre strands is continuously impregnated with a duroplastically setting synthetic resin, preferably polyester, and the fibre strands, in particular glass fibre rovings, are conducted to axially entering a longitudinal open-ended hollow mould having an internal mould surface corresponding to the peripheral surface of the profile to be manufactured while being combined to a bundle filling said open-ended hollow mould, the synthetic resin is caused to set within the open-ended hollow mould and the profiled strand set in the open-ended hollow mould is continuously extracted from the outlet opening of the open-ended hollow mould, characterized in that, for the formation of a one-piece window frame profile having an approximately L-shaped cross section comprising a closed cavity (3) in the longitudinal leg (2) of the L shape and a closed cavity (5) in the cross leg (4) of the L shape and provided with a plurality of grooves, recesses or the like on its peripheral surface for fastening additional profile strips, sealing strips and the like and trims therein, which grooves (8, 16, 17, 19) provided on the peripheral surface of the profile are provided with undercuts, the longitudinal fibre strands are conducted so as to surround at least two mandrels adjacently inserted in said open-ended hollow mould for forming said cavities of the window frame profile, and that the longitudinal fibre strands are conducted so as to fill also the undercuts on the peripheral surface of the profile which are formed by corresponding undercut surfaces of the open-ended hollow mould.

11. A process according to claim 10, characterized in that the entire bundle of the axially extending fibre strands conducted in the open-ended hollow mould and/or one or both partial bundles conducted in an axially extending manner so as to surround the mandrels are continuously surrounded by one or several fibre strands on the way from impregnation to the open-ended hollow mould, said fibre strands peripherally extending about said bundle of axially oriented fibre strands or about said partial bundle(s).

12. A process according to claim 11, characterized in that one or both partial bundle(s) are continuously surrounded by one or several peripherally extending fibre strands, and that said partial bundle(s), together with a number of further fibre strands substantially extending in the same manner as the axial fibre strands of said partial bundle, again are continuously surrounded by one or several peripherally extending fibre strands.

13. A process according to claim 11 or 12, characterized in that, following the external layer of the peripherally extending fibre strands, a layer of axially extending fibre strands covering said layer towards outside is provided in said bundle of fibre strands introduced into the open-ended hollow mould.

14. A process according to any one of claims 11 to 13, characterized in that a circular braid is formed about said bundle or partial bundle of axially oriented fibre strands, surrounding said bundle or partial bundle in a hose-like manner and constituting said peripherally extending fibre strands.

15. A process according to any one of claims 11 to 13, characterized in that a circular knit surrounding said bundle or partial bundle of axially directed fibre strands in a hose-like manner is produced of one or several fibre strands to constitute said peripherally extending fibre strands.

## Revendications

1. Profil de cadre dormant de fenêtre (1; 40; 45; 50) constitué d'une seule pièce et muni, sur sa surface périphérique (20, 7, 21), d'un nombre de rainures, évidements ou pareil (8, 9, 16, 17, 18) dans lesquels peuvent être fixés des listels profilés additionnels, des listels d'étanchéité et pareil ainsi que des armatures, lequel profil est constitué d'un matériau thermodurcissable armé de mêches de fibres longitudinales, en particulier de rovings de fibres de verre, et comprend au moins une cavité longitudinale fermée (3, 5), caractérisé en ce que le profil (1; 40; 45; 50) a une section transversale approximativement en forme de L et comprend une cavité fermée (3) dans la branche longitudinale (2) de la forme en L et une cavitée fermée (5) dans la branche transversale (4) de la forme en L, en ce que les rainures (8, 16, 17, 19) prévues sur la surface périphérique du profil sont configurées avec de contre-dépouilles, et en ce que les mêches de fibres longitudinales sont prévues de manière distribuée sur l'ensemble de la section du profil, aussi même dans les contre-dépouilles de la surface périphérique (20, 7, 21) du profil.

2. Profil de cadre dormant de fenêtre selon la revendication 1, caractérise en ce que la cavité (3) prévuee dans la branche longitudinale (2) de la forme en L s'étend essentiellement sur toute l'extension longitudinale (6) de ladite branche.

3. Profil de cadre dormant de fenêtre selon la revendication 1 ou 2, caractérisé en ce que le profil (1; 40; 45; 50), sur la face intérieure (7) de la branche longitudinale (2), comprend deux rainures s'étendant respectivement sur à peu près la moitié de la longueur (6) de la branche longitudinale (2), lesdites rainures étant séparées par une nervure centrale (10).

4. Profil de cadre dormant de fenêtre selon la revendication 3, caractérisé en ce que la nervure centrale (10) est configurée en tant que nervure creuse, sa cavitée (41) étant constituée par une indentation d'une cavitée (3) s'étendant sur l'extension longitudinale (6) de la branche longitudinale (2) du profil.

5. Profil de cadre dormant de fenêtre selon la revendication 1, caractérisé en ce qu'une rainure (8) est ménagée dans le profil (1; 40) sur la face intérieure (7) de la branche longitudinale (2), rainure qui a des parois latérales contre-dépouillées (12, 14) et suit le coin de transition (11) vers la branche transversale (4), une rainure latérale contre-dépouillée (15) qui part de cette rainure (8) étant prévue dans la parois latérale de rainure (14) se situant vers le centre de la branche longitudinale.

6. Profil de cadre dormant de fenêtre selon l'une des revendications 1 à 5, caractérisé en ce que non seulement des mêches de fibres s'étendant en sens longitudinal, mais aussi un renforcement transversal, sont noyés dans le matériau thermodurcissable du profil (1; 40; 45), lequel renforcement transversal comprend des mêches de fibres (24, 25, 26; 42, 46) s'étendant, en sens périperique, autour d'une part des mêches de fibres longitudinales ou autour de l'ensemble des mêches de fibres longitudinales.

7. Profil de cadre dormant de fenêtre selon la revendication 6, caractérisé en ce que les mêches de fibres s'étendant en sens périphérique (95) vont en spirales.

8. Profil de cadre dormant de fenêtre selon la revendication 7, caractérisé en ce que les mêches de fibres longitudinales s'étendant en sens périphérique (24, 25, 26; 42; 46; 95) s'étendent au moins autour d'une cavité fermée (3, 5).

9. Profil de cadre dormant de fenêtre selon l'une quelconque des revendications 1 à 8, caractérisé en ce que le profil, sur les faces visibles extérieures, porte un contreplacage en bois (35) relié au matériau thermodurcissable du profil par collage ou par noyage.

10. Procédé de fabrication d'un profil de cadre dormant de fenêtre, selon lequel, pour la formation du profil de cadre dormant de fenêtre, on imprégne en continu d'une résine synthétique thermodurcissable, de préférence, de polyester une pluralité de mêches de fibres et on amène les mêches de fibres, en particulier des rovings de fibres en verre, à l'entrée axiale dans une moule creuse continue longitudinale ayant une surface de moule intérieure correspondant à la surface périphérique du profil à produire en les unissant en un faisceau qui remplit cette moule creuse continue, on fait durcir la résine synthétique dans la moule creuse continue et on extrait en continu de l'orifice de sortie de la moule creuse continue la mêche profilée durcie dans la moule creuse continue, caractérisé en ce que, pour la formation d'un profil en une seule pièce ayant une section transversale approximative en forme de L définissant une cavité fermée (3) dans la branche longitudinale (2) de la forme en L et une cavitée fermée (5) dans la branche transversale (4) de la forme en L et muni, sur sa surface périphérique, d'un nombre de rainures, évidements ou pareil dans lesquels peuvent être fixés des listels profilés additionnels, des listels d'étanchéité et pareil ainsi que des armatures, lesdites rainures (8, 16, 17, 19) prévues sur la surface périphérique du profil étant configurées avec des contre-dépouilles, les mêches de fibres longitudinales sont amenées de la manière à entourer au moins deux mandrins insérés dans la moule creuse continue l'un à côté de l'autre pour former les cavités du profil de cadre dormant de fenêtre, et en ce que les mêches de fibres longitudinales sont amenées de manière à remplir aussi les contre-dépouilles sur la surface périphérique du profil formées par des surfaces contre-dépouillées correspondantes de la moule creuse continue.

11. Procédé selon la revendication 10, caractérisé en ce que le faisceau entier des mêches de fibres s'étendant axialement et amenées dans la moule creuse continue et/ou un ou les deux faisceau(x) partiel(s) amenés axialement de manière à entourer les mandrins sont entourés en continu, sur le passage de l'imprégnation à la moule creuse continue, avec une ou plusieurs mêches de fibres s'étendant, en sens périphérique, autour dudit faisceau de mêches de fibres orientées axialement ou dudit ou desdits faisceau(x) partiel(s).

12. Procédé selon la revendication 11, caractérisé en ce qu'un ou les deux faisceau(x) partiel(s) sont entourés en continu d'une ou plusieurs mêches de fibres s'étendant en sens périphérique, et en ce que ce(s) faisceau(x) partiel(s), conjointement avec un nombre de mêches de fibres additionelles s'étendant essentiellement comme les mêches de fibres axiales dudit faisceau partiel, est entouré de nouveau d'une ou plusieurs mêche(s) de fibres s'étendant en sens périphérique.

13. Procédé selon la revendication 11 ou 12, caractérisé en ce que, suivant la couche extérieure des mêches de fibres s'étendant en sens périphérique, une couche de mêches de fibres s'étendant axialement et couvrant ladite couche vers l'extérieur est prévue dans le faisceau de mêches de fibres introduit dans la moule creuse continue.

14. Procédé selon l'une quelconque des revendications 11 à 13, caractérisé en ce qu'un treillis en tubulaire est formé autour du faisceau ou faisceau partiel de mêches de fibres orientées axialement, de manière à entourer ledit faisceau ou faisceau partiel à la manière d'un tuyau souple, ledit treillis constituant les mêches de fibres s'étendant en sens périphérique.

15. Procédé selon l'une quelconque des revendications 11 à 13, caractérisé en ce qu'un tricotage en tubulaire entourant à la manière d'un tuyau souple ledit faisceau ou un faisceau partiel de mêches de fibres orientées axialement est fabriqué d'une ou plusieurs mêches de fibres pour constituer les mêches de fibres s'étendant en sens périphérique.
